# EUROPEAN PATENT APPLICATION

(11) **EP 2 840 122 A1**
(43) Date of publication of application: **25.02.2015**
(21) Application number: 14180484.9
(22) Date of filing: 11.08.2014
(51) Int. Cl.: C09D 129/10, C09D 175/04, C08K 5/3477, C09D 161/28, C09D 163/00

(54) **Curable composition comprising hydroxyl functionalized polyvinyl ether**

(30) Priority: 21.08.2013 EP 13181189
(71) Applicant: BASF SE, 67056 Ludwigshafen (DE)
(72) Inventor: Abdallah, Radwan, 67063 Ludwigshafen (DE)

(57) **Abstract**

Curable composition comprising

a polyvinylether (A) which is composed to at least 60 % by weight of radically polymerizable compounds with at least one vinyl ether group and has a content of hydroxy groups of at least 0.01 mol hydroxy groups per 100 grams of polyvinylether

and a compound (B) which comprises at least two functional groups selected from epoxy groups, isocyanate groups,a mino groups and hydroxy or alkoxy groups.

## Description

The present invention relates to a curable composition comprising
a polyvinylether (A) which is composed to at least 60 % by weight of radically polymerizable compounds with at least one vinyl ether group (hereinafter referred to as vinyl ether monomers) and has a content of hydroxy groups of at least 0.01 mol hydroxy groups per 100 grams of polyvinylether
and a compound (B) which comprises at least two functional groups selected from epoxy groups, isocyanate groups, amino groups and hydroxy or alkoxy groups.

Coating compositions often comprise two reactive components. Well known coating compositions comprise for example polyisocyanates which react with polyols to give polyurethane coatings. Other coating compositions are based on epoxy resins that react with amino hardeners.

Coating compositions should be suitable for different applications in the coatings industry and should therefore fulfill a variety of requirements regarding handling and performance characteristics.

Hence there is a steady demand in new coating compositions that are suitable for different applications in the coating industries and may be an alternative to existing coating compositions or may even be an improvement compared to existing coating compositions.

Polyvinylether comprising hydroxyl groups are known from EP-A 379 166 and DE-A 4130428.

DE-A 4130428 discloses copolymers of hydroxyl alkyl vinylether and the use thereof in cleaning or washing agents.

EP-A 379 166 discloses the modification of hydroxyl modified polyvinylethers by esterification or other chemical reactions and thus replacing the hydroxyl group by an ether group. The obtained modified polyvinylether is used as additive to coating compositions and reduces the formation of foam and supports the leveling of the coating (foam inhibitor agent and leveling agent).

From JP 04170482 curable coating compositions comprising copolymers of hydroxy alkyl vinylethers are known. Such copolymers are copolymers of hydroxy vinyl ether with acrylics. Polyvinylethers are not mentioned.

Object of the present invention were curable coating compositions which are an alternative to existing curable coating composition. The curable coating composition should have low viscosity, a high reactivity and good performance characteristics. Coatings obtained should have good mechanical properties as hardness and elasticity. In particular coatings obtained should have good durability and stability against any kind of impact as humidity, UV light, chemicals and any other environmental influences.

Accordingly a curable composition as defined above and the use thereof as coating material have been found.

### To the poly vinyl ether (A)

The curable composition comprises a polyvinylether (A) which is composed to at least 60 % by weight of radically polymerizable compounds with at least one vinyl ether group (hereinafter referred to as vinyl ether monomers) and has a content of hydroxyl groups of at least 0.01 mol hydroxy groups per 100 grams of polyvinylether.

A vinyl ether monomer is a monomer comprising at least one vinyl ether group which is a group

H₂C=CH-O-R

with R being an organic group.

Such vinyl ether monomers are (co)polymerizable and give polymers with a units

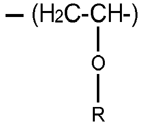

The molecular weight of the vinyl ether monomer and the corresponding unit of the polymer chain is the same.

The polyvinylether (A) is composed of at least 60 % by weight of vinyl ether monomers meaning that at least 60% by weight of vinylether monomers have been polymerized (based on all polymerized monomers) to give a polyvinylether comprising at least 60 % of the above polymerized units.

Preferred is polyvinylether which is composed of at least 80 % by weight, particularly preferred is a polvinylether composed of at least 90 % by weight, most preferred is a polyvinylether composed of at least 95 % by weight, respectively at least 98 % by weight of vinyl ether monomers (bases on the total weight of the polyvinylether).

At least some of the vinyl ether monomers are monomers comprising a hydroxyl group, so that the obtained polyvinylether (A) has a content of hydroxy groups of at least 0.01 mol hydroxy groups per 100 grams of polyvinylether (A). A molecular weight of 17 grams of the hydroxy group is used for such calculation.

Preferably the polyvinylether comprises at least 0.03, in particular at least 0.05 and most preferred at least 0.1 respectiveley at least 0.2 mol hydroxy groups per 100 grams of polyvinylether.

Preferably the polyvinylether comprises not more than 1 mol, particularly not more than 0.8 mol and most preferred not more than 0.6 mol, respectively not more than 0.5 mol of hydroxy groups per 100 grams of polyvinylether.

Hence the polyvinylether comprises for example 0.03 to 1 mol, respectively 0.05 to 1 mol or 0.1 to 0.8 mol or 0.2 to 0.6 mol hydroxy groups per 100 grams of polyvinylether. In one particularyly preferred embodiment polyvinylether (A) comprises 0.3 to 0.5 mol of hydroxyl groups per 100 grams of polyvinylether (A).

In a preferred embodiment the polyvinylether (A) is the polymerization product of
(a) vinyl ether monomers comprising no hydroxy group
(b) vinyl ether monomers comprising at least one hydroxy group and
(c) further non-vinyl ether monomers which are copolymerizable with (a) and (b)

### To vinyl ether monomers (a):

Preferably vinyl ethers (a) are selected from
(a1) mono vinyl ethers of formula I

   H₂C=CH-O-R₁

   wherein R₁ is hydrocarbon group, in particular an aliphatic hydrocarbon group, which may comprise ether groups and consists of 1 to 20 C atoms, preferably of 1 to 10 C atoms.
(a2) divinylethers of formula II

   H₂C=CH-O-R₂-O-CH=CH₂

   wherein R₂ is a hydrocarbon group, in particular an aliphatic hydrocarbon group, which may comprise ether groups and consists of 1 to 20 C atoms, preferably of 1 to 10 C atoms.
or from mixtures of (a1) and (a2).

Preferred vinyl ethers (a1) are those of formula I wherein R₁ is an alkyl group or a cycloalkyl group, which may be alkoxylated or polyalkoxylated and comprise 1 to 20 carbon atoms,

More preferred vinyl ethers (a1) are those of formula I wherein R₁ is a C1 to C10 alkyl group, in particular a C1 to C6 alkyl group, a cyclohexyl group or a (poly)alkoxylated group of formula

(X-O)ₙY

wherein X is a C2- to C4- alkylen group or a cyclohexylen group, Y is a C1 to C4 alkyl group and n is number from 1 to 4; in particular n is 1 or 2.

As preferred examples of vinyl ethers (a1) may be mentioned:
Methylvinylether, ethylvinylether, propylvinylether, n-butylvinylether, cyclohexylvinyether, alkoxylated vinyl ethers as methoxyethylvinylether, methoxybutylvinylether, ethoxyethylvinylether, ethoxybutylvinylether or butoxybutylvinylether.

A most preferred vinyl ether (a1) is cyclohexylvinylether.

Preferred vinyl ethers (a2) are those of formulas II wherein R₂ is selected from an alkylen group, a cycloalkylen group or an alkylen group comprising a cycloalkylen group which may be alkoxylated or polyalkoxylated and comprise 1 to 20 carbon atoms.

More preferred vinyl ethers (a2) are those of formula II wherein R₂ is a C1 to C10 alkylen group, in particular a C2 to C8 alkylen group or a cyclohexylen group or a cyclohexan dimethylen group of formula

-CH₂- C₆H₁₀-CH₂-

or a (poly)alkoxylated group of formula

(X-O)ₙX

wherein X is a C2- to C4- alkylen group, a cyclohexylen group, or the above cyclohexan dimethylen group and n is a number from 1 to 4. Preferably n is 1 or 2.

As preferred examples of vinyl ethers (a2) may be mentioned:
Ethylene glycol divinyl ether (R₂= ethylene)
Butylene glycol divinyl ether (R₂= butylene)
Di ethylene glycol divinyl ether (R₂= (X-O)ₙX with X= ethylene and n=1)
Tri ethylene glycol divinyl ether (R₂= (X-O)ₙX with X= ethylene and n=2)
Cyclohexan dimethanol divinyl ether (R₂ = -CH₂- C₆H₁₀-CH₂-)

Vinyl ethers (a) may consist of vinyl ethers (a1), only or alternatively consist of vinyl ethers (a2), only.

In a preferred embodiment vinyl ethers (a) comprise (based on the total weight of (a1) and (a2)):
20 to 100 % by weight of vinyl ethers (a1) and
0 to 80 % by weight of vinyl ethers (a2).

In a particularly preferred embodiment vinyl ethers (a) consist of
60 to 100 % by weight of vinyl ethers (a1) and
0 to 40 % by weight of vinyl ethers (a2).

In a more preferred embodiment vinyl ethers (a) consist of
80 to 100 % by weight of vinyl ethers (a1) and
0 to 20 % by weight of vinyl ethers (a2).
or consist of
90 to 100 % by weight of vinyl ethers (a1) and
0 to 10 % by weight of vinyl ethers (a2).

In one specifically preferred embodiment vinyl ethers (a) comprise vinyl ether (a1), only and no vinyl ether (a2).

### to vinyl ether monomers (b):

Vinyl ether monomers (b) may comprise, for example one, two or three hydrxoy groups. Preferred are vinyl ethers (b) with one or two hydroxyl groups, most preferred are vinyl ether (b) with one hydroxyl group. Vinyl ether (b) preferably have one vinyl ether group.

Suitable vinyl ether (b) may correspond to above vinyl ethers (a), with the only difference that they comprise at least one substituent which is a hydroxy group.

Preferred vinyl ethers (b) are vinyl ethers of formula III

H₂C=CH-O-R₃-OH

wherein R₃ is a hydrocarbon group, in particular an aliphatic hydrocarbon group, which may comprise ether groups and consists of 1 to 20 C atoms, preferably of 1 to 10 C atoms.

More preferred vinyl ethers (b) are those of formulas III wherein R₃ is selected from an alkylen group, a cycloalkylen group or an alkylen group comprising a cycloalkylen group which may be alkoxylated or polyalkoxylated and comprise 1 to 20 carbon atoms.

More preferred vinyl ethers (b) are those of formula III wherein R₃ is a C1 to C10 alkylen group, in particular a C2 to C8 alkylen group or a cyclohexylen group or a cyclohexan dimethylen group of formula

-CH₂- C₆H₁₀-CH₂-

or a (poly)alkoxylated group of formula

(X-O)ₙX

wherein X is a C2- to C4- alkylen group, a cyclohexylen group, or the above cyclohexan dimethylen group and n is a number from 1 to 4. Preferably n is 1 or 2.

As preferred examples of vinyl ethers (a2) may be mentioned:
hydroxy ethyl vinyl ether
n-hydroxy butylvinyl ether)
Di ethylene glycol mono vinyl ether (R₃ = (X-O)ₙX with X= ethylene and n=1)
Tri ethylene glycol mono vinyl ether (R₃= (X-O)ₙX with X= ethylene and n=2)
Cyclohexan dimethanol mono vinyl ether (R₃ = -CH₂- C₆H₁₀-CH₂-)

A most preferred vinyl ether (b) is n-hydroxy butylvinylether.

### to non-vinyl ether monomers (c)

non-vinyl ether monomers may be used in combination with above vinyl ether monomers (a) and (b).

Suitable non-vinyl ether monomers which are copolymerizable with vinyl ether monomers are monomers which can be copolymerized by a radical or a cationic polymerization process. In particular monomers with a (meth)acrylic group, an allyl group or a vinyl group other than a vinyl ether group, for example a vinyl ester group, or a main chain vinylen group such as in butadiene, are suitable. As preferred examples of suitable monomers C1-to C10 alkyl(meth)acrylates, styrene, vinyl acetate may be mentioned.

The content of non-vinyl monomers (c) is 0 to 20 % by weight, based on the polyvinylether (A), respectively on the total amount of all monomers (a) to (c).

Preferably the content of non-vinyl monomers (c) is 0 to 10 % by weight; particularly preferred is a content of 0 to 5 % by weight and most preferred is a content of 0 to 2 % by weight of non-vinyl monomers (c) based on the polyvinylether (A), respectively on the total amount of all monomers (a) to (c). In a specifically preferred embodiment no non-vinyl ether monomers are used and the polyvinylether (A) consists only of vinyl ether monomers (a) and (b).

### Synthesis of the polyvinylether (A)

Poly vinyl ethers (A) may be obtained by a radical or cationic polymerization. Such polymerization processes are well known.

A radical polymerization process for copolymers of hydroxyalkyl vinyl ethers is disclosed for example in EP-A 0379 166, where tertiary butyl per acetate is used as initiator. The cationic or radical copolymerization of hydroxyl alkyl vinyl ethers and vinyl ethers is also described in DE-A 4130428.

In case of radical polymerization a peroxy type or an azo type initiator may be used. A particularly preferred azo initiator does not comprise nitrile groups, as disclosed in older patent application (PF 74327) of BASF.

Preferred nitrile group free azo initiators are those of formula IV 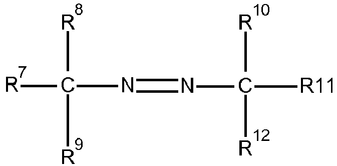 wherein R7, R8, R10, R11 independently of each other stand for a C1- to C8 alkyl group and R9 and R12 independently of each other stand for a C1- to C8 alkyl group or a carboxylate group of formula V 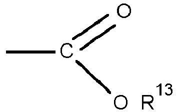 with R13 being a C1- to C8 alkyl group.

Preferred nitrile free compounds are those of formula IV, wherein each of R7, R8, R10, R11 are a methyl or ethyl group, R9 and R12are a group of formula V and R13 is a methyl or ethyl group.

As an example dimethyl 2, 2'-azobis(2-methylpropionate) available as V-601 from Wako Pure Chemical Industries, Ltd. may be mentioned.

The azo initiator is preferably used in amounts of 0.1 to 10 parts by weight, more preferably of 0.2 to 8 parts by weight, most preferably of 0.5 to 5 parts by weight on 100 parts of monomers to be polymerized.

The polymerization process may be performed in the presence or absence of solvents.

Suitable solvents are hydrophilic organic solvents that solve the above monomers and initiator, but do not interact with the hydroxyl group of the hydroxyl alkyl vinyl ether. Preferably such solvents do not have an acidic hydrogen atom in the molecule.

As solvents may be mentioned, for example, ethers, cyclic ethers as tetrahydrofurane, ketones as aceton, methyl ethyl ketone or esters as ethyl acetate or butyl acetate.

In a preferred embodiment the initiator is used in form of a solution in an organic solvent. Preferably no further solvent than that amount necessary to solve the initiator is used in the process.

The polymerization may be performed in any reaction vessel. The polymerization may be performed continuously, semi-continuously or batch-wise.

In a continuous process the starting materials are fed continuously to the reaction vessel and the products are withdrawn continuously. In a batch process all starting materials are in the the reaction vessel at the beginning of the polymerization.

In a semi-continuous process, at least some of the starting materials are fed continuously to the reaction vessel.

Preferred is a semi-continuous process, wherein some of the initiator is given to the reaction vessel at the beginning of the reaction and the remaining amount of the initiator is fed continuously during the term of the reaction.

The polymerization process is preferably performed at a temperature of 50 to 150 °C, more preferred of 60 to 100 °C and most preferred of 70 to 95 °C.

The polymerization process is preferably performed at a pressure of 0.5 to 10 bars, more preferred of 1 to 5 bars. Preferably the polymerization process is performed in the absence of oxygen. In particular the vessel is purged with an inert gas, preferably nitrogen, to remove any oxygen. Hence any pressure is in particular due to an overload pressure of inertgas.

Poly vinyl ether (A) has preferably a number average molecular weight Mn of 300 g/mol to 10.000 g/mol, more preferably of 500 g/mol to 5.000 g/mol; most preferred is a Mn of 800 to 3.000 g/mol. Mn is measured by gel permeation chromatography, using tetrahydrofurane as solvent and polystyrene as polymer standard.

The polymer dispersion index PDI (which is Mw/Mn) of polyvinylether (A) is preferably 1.1 to 5, in particular 1.5 to 3.

In a preferred embodiment of the invention poly vinyl ether (A) is liquid at 20°C, 1 bar.

To further compound (C) with hydroxy groups

The curable composition may comprise a further compound (C) with hydroxy groups.

### The further compound (C) may be also a mixture of different compounds (C).

As possible compounds (C) polyester-polyols, in particular polyester-diols, or polyether-polyols, in particular polyether-diols, or hydroxy groups comprising polymers obtained by radical polymerization may be mentioned.

Suitable polyester-polyols are obtainable by polycondensation of polycarboxylic acids, in particular dicarboxylic acids, and polyols, in particular diols.

Dicarboxylic acids may be aliphatic or aromatic dicarboxylic acids like saturated or unsaturated C2 to C20 alkylendicarboxylic acids, for example maleic acid or adipinic acid, or phthalic acid, isophthalic acid, terephthalic.

Diols may, for example be alkylene diols as ethylenglycol, propylenglycol , butylenglycol etc. and (poly)alkoxylated alkylene diols.

In the preparation of polyester-polyols the polyol, respectively the diol is used in excess, so that a polyester with hydroxy groups, in particular two end-standing hydroxy groups is obtained.

Suitable polyetherols are for example (poly)alkoxylated alkylene diols as mentioned above.

Suitable hydroxy groups comprising polymers obtained by radical polymerization, for example (meth)acrylic polymers comprising hydroxy groups. Such (meth)acrylic polymers mac, for example be obtained by polymerizing C1- to C10-alkyl (meth)acrylates and at least one hydroxy group comprising C1- to C10-alkyl (meth)acrylate.

The curable composition may comprise polyvinylether (A) as the only compound with hydroxy groups or, alternatively, in minor amounts compared to a compound (C).

So the curable composition may comprise the polyvinylether (A) in an amount of at least 1 % on the total amount of polyvinylether (A) and further compounds (C), for example in an amount of 1 to 20 % by weight on the total amount of polyvinylether (A) and further compounds (C).

The polyvinylether (A) is very suitable as the only or major hydroxyl group comprising compound in the curable composition.

So the curable composition may, for example, comprise at least 50 % by weight, in particular at least 70 % by weight, more preferred at least 85 % by weight, respectively at least 95 % by weight or 100 % by weight of polyvinylether (A) based on the total amount of polyvinylether (A) and further compounds (C).

Generally the curable composition comprises polyvinylether (A) in an amount of at least 1 % by weight, more preferred in an amount of at least 5 % by weight based, most preferred in an amount of at least 10 % by weight, respectively at least 20 % by weight, respectively of at least 50 % by weight, of at least 70 % by weight etc., based on the total amount of polyvinylether (A) and further compounds (C), as set out above.

### To compound (B)

The curable composition comprises a compound (B) which comprises at least two functional groups selected from epoxy groups, isocyanate groups, amino groups and hydroxy or alkoxy groups.

### Compound with epoxy groups

The compound with epoxy groups may be one compound or a mixture of compounds. Compounds with at least two epoxy groups are also referred to as polyepoxides.

As compounds with epoxy groups it is possible in principle to use all substances which contain epoxide groups and which are typically used in curable epoxy resin compositions. Contemplated in particular are epoxy compounds having 1 to 10 epoxy groups, preferably at least having two epoxy groups in the molecule. The amount of epoxide groups in typical compounds B is commonly in the range from 120 to 3000 g/equivalent, calculated as what is called the epoxide equivalent in accordance with DIN 16945.

As epoxy compound (B) a polymer obtainable by radical polymerization, for example a polyacrylate with epoxy groups, obtained by copolymerizing epoxy group containing monomers (such as glycidyl(meth)acrylate) with other monomers (such as C1 to C10 alkyl(meth)acrylates may be mentioned.

Preferred epoxy compounds (B) are what are called glycidyl-based epoxy resins, more particularly those prepared by etherification of aromatic, aliphatic or cycloaliphatic polyols with epichlorohydrin. Substances of this kind are frequently also referred to as polyglycidyl ethers of aromatic, or as polyglycidyl ethers of aliphatic or cycloaliphatic polyols, respectively.

The epoxy compounds may be liquid, solid or mixtures thereof.

The amount of epoxide groups in typical liquid compounds of component A is commonly in the range from 120 to 200 g/equivalent, and that of the solid resins is in the region of 450-3000 g/equivalent, calculated as what is called the epoxide equivalent in accordance with DIN 16945.

The viscosity of the liquid epoxy cpmpound at 25°C is typically in the range from 1 to 20 Pas, preferably in the range from 5 to 15 Pas. The viscosity of the solid compound at 25°C is typically in the 5 to 40 Pas range, preferably in the range from 20 to 40 Pas. The viscosities reported here are the values determined in accordance with DIN 53015 at 25°C as 40% strength solutions of the resins in methyl ethyl ketone.

In one preferred embodiment of the invention, the epoxy compound B is selected from polyglycidyl ethers of aromatic polyols and polyglycidyl esters of cycloaliphatic polyols, which may, for example be obtained by hydrogenation of the aromatic polyols; polyglycidyl ethers of aromatic polyols being more preferred.

Examples thereof are the resins derived from the diglycidyl ether of bisphenol A (DGEBA resins, R' = CH₃), and the resins derived from bisphenol F (R' = H), which can be described by the general formula below: 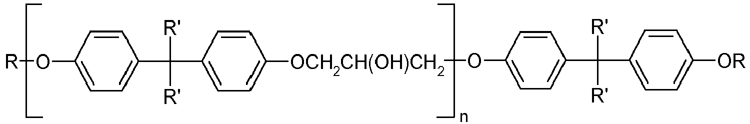 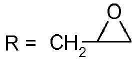 R' = H or CH₃

In the formula, the parameter n indicates the number of repeating units, and the average value of n corresponds to the respective average molecular weight.

### Compound with isocyanate groups

Coumpounds with at least two isocyanate groups are referred to as polyisocyanates. The compound with isocyanate groups may be one compound or a mixture of compounds.

It is possible to use any polyisocyanates which are known for the preparation of polyurethanes such as aliphatic or aromatic diisocyanates like hexamethylene diisocyanate, isophorone diisocyanate. 1,4 cyclohexyl diisocyanate, toluylene disocyante or diphenylmethane 2,4'-diisocyanate and/or diphenylmethane 4,4'-diisocyanate, also referred to as 2,4'-MDI and 4,4'-MDI, toluoylendiisocyanate. Further diisocyanates are, for example uretdiones, which are dimers of two diisocyanates.

As polyisocyanate with three isocyanate groups isocyanurates, which are the addition product of three diisocyanates may be mentioned.

Compounds with at least two isocyanate groups may also be so called isocyanate prepolymers which are, for example, obtained by reacting compounds with at least two hydroxyl groups (polyols) or compounds with at least two primary or secondary amino groups (polyamines) with a molar excess of polyisocyanates, in particular diisocyanates.

Suitable polyols for isocyanate prepolymers are alkane diols, like ethylenglycol or butylenglycol or (poly)alkoxylated alkandiols with two end standing hydroxyl groups, in particular (poly)ethoxylated, (poly)propoxylated or (poly)butoxylated alkane diols or polyester polyols, in particular polyester diols. Polyester diols are esters of organic dicarboxylic acids having from 2 to 12 carbon atoms, preferably aliphatic dicarboxylic acids having from 4 to 6 carbon atoms, and an excess of a polyols, preferably diols.

Suitable polyamines are, for example, alkane diamines, as ethylene diamine or butylene diamine.

In a preferred embodiment the compound with isocyanate groups is liquid at 20°C, 1 bar.

### Compound with amino groups

Compounds with at least two amino groups are referred to as polyamines. The compound with amino groups may be one compound or a mixture of compounds.

Preferably the amino groups are primary or secondary amino groups.

Polyamines may, for example be polyoxyalkyleneamines, known as polyether amines. Such polyoxyalkyleneamines are preferably amine-terminated bifunctional or higher-functional polyalkylene oxides, in general polyoxyethylene oxides or polyoxypropylene oxides, having number average molecular weights of at least 350 g/mol, for example in the range from 350 to 6000 g mol⁻¹, preferably from 380 to 5100 g mol⁻¹, wherein the amino group is preferably aliphatically bonded. It is also possible to use amine-terminated polytetrahydrofuran (PTHF). The amine groups of the polyether amines are preferably primary amine groups. It is also possible to use only one polyether amine. The polyether amines (b) are in particular diamines or triamines. Such compounds are marketed, for example, by Huntsman under the name Jeffamine^{®} or by BASF as polyether amines under the name Baxxodur®.

Polyamines are usually prepared by catalytic amination of the corresponding polyols, preferably the polyols mentioned in the preceding chapter and used for the preparation of isocyanate prepolymers.

Compound (B) with amino groups may also be polymers obtainable by radical polymerization, for example a polyacrylate with primary or secondary amino groups. Such a polyacrylate may be obtained by copolymerizing amino group containing (meth)acrylic monomers with other monomers (such as C1 to C10 alkyl(meth)acrylates).

### Compound with hydroxy or alkyoxy groups

Preferred compounds with hydroxy or alkyoxy groups are compounds that react with the hydroxyl groups of polyvinylether (A) under etherification or transetherification. Preferably, the compound with an hydroxyl or alkoxy group is a compound with an alkoxy group.

Preferred compounds with alkoxy groups are melamine resins. Preferably, melamine resins are condensation products of melamine and formaldehyde and optionally further alcohol. Melamine resins may comprise only one melamine ring or several, for example 1 to 10, in particular 1 to 5 melamine rings.

The primary amino groups of melamine react with formaldehyde to give amino dimethylol groups. The two hydroxy groups of the amino methylol group preferably are etherified with additional alcohol, in particular a C1- to C4 alcohol like methanol or butanol; so that the final product is an alkoxylated melamine formaldehyd resin.

Under acid conditions the hydroxy groups of polyvinylether (A) undergo a transetherification and replace the alkoxy group in such melamine formaldehyd resins.

Preferred compounds (B) are compounds with at least at least two functional groups selected from epoxy groups, isocyanate groups and alkoxy groups. More preferred are compounds (B) with at least two epoxy groups or at least two isocyanate groups. Most preferred are compounds (B) with isocyanate groups.

### To the curable composition

Preferably, the curable composition comprises a compound (B) selected from polyepoxides, polyisocyanates, polyether amines, polyacrylates with primary or secondary amino groups and melamine resins.

In a preferred embodiment the curable composition comprises polyisocyanates or melamine resins as compound (B).

The molar ratio of the hydroxy groups of (A) and optionally (C) to the functional groups of (B) is preferably from 0.1 : 1 up to 1 : 0.1, more preferred from 0.5 : 1 up to 1 : 0.5 and most preferred from 0.8 to 1 up to 1 : 0.8.

Preferably, the curable composition is liquid at 20°C, 1 bar. In a preferred embodiment all compounds (A), (B) and (C) are liquid.

The curable composition may comprise a solvent or mixture of solvents. Such solvents may be water or organic solvents that do not react with compounds (A), (B) and (C). Such organic solvents may, for example be polar, non- protonic solvents like organic ether or organic ester as butyl acetate.

In a particular preferred embodiment the curable composition is used for high solid applications. Hence a particularly preferred curable composition comprises little or no water or organic solvent (unreactive compounds which are fluid at 20°C, 1 bar).

In a preferred embodiment, the curable composition comprises less than 20% by weight of water or organic solvents, particularly preferably less than 10 parts by weight and in particular less than 5 parts by weight of water or organic solvents, based on 100 parts by weight of printing ink. Very particularly preferably, the curable composition comprises substantially no or less than 1 by weight of % water or organic solvents, based on the total weight of the curable composition.

The curable composition may comprise further additives, in particular catalysts for the curing reaction of polyvinylether (A) with the compound (B).

In case of a compound (B) with epoxy groups such catalysts may, for example, be tertiary amines.

In case of a compound (B) with isocyanate groups such catalysts may, for example, be di butyl tin dilaurate.

In case of a compound (B) with amino groups such catalysts may, for example, be acids like para-toluene sulfonic acid.

In case of a compound (B) with alkoxy groups (melamine resins) groups such catalysts may, for example an acid, like formic acid, acetic acid et.

Furthermore the curable composition may comprise further additives which are usual or helpful for the envisaged application of the composition. Such additives may, for example be pigments, including effect pigments, dyes, fillers, stabilizers, antioxidants or biocides, leveling agents, antifoams, wetting agents, antistatic agents, etc.

The curable composition may also comprise other binders which are used in combination with the binder combination polyvinylether (A) and compound (B). For example radiation curable compound could be included resulting in a hybrid system which requires two different kind of curing procedures, a curing reaction of (A) and (B) and in addition, a radiation curing. However such additional binders are not required. In a preferred embodiment of the invention the curable composition comprises the binders system consisting of polyvinylether (A), compound (B) and optionally compound (C) as the only binder system.

The curable composition may be a one component or a two component composition (1 K or 2K composition). In a two component composition the reactive components, here polyvinylether (A) and optionally (C) as one reactive component and compound (B) as the other one) are kept separately until the application thereof. The two reactive components may comprise the additives. The two reactive components are mixed and applied, for axample as coating to the desired substrate.

In a one component coating composition the reactive components are mixed long before the application thereof, the mixture is stable. Such stability may arise in the present case from less reactive components (B) which will require higher temperatures during curing.

Preferably the curable composition is used as coating material, the coating material may be a liquid coating material or a powder coating material.

The curable composition is coated as coating material to the desired substrate which may be any substrate, like paper, plastic, wood, metal etc.

The coating may be cured at higher temperatures, for example of 30 to 200°C, preferably at 100 to 200°C, in particular at 120 to 170°C.

The curable compositions of the present invention have low viscosity, high reactivity and have a high hydrolysis resistance, high UV resistance and high chemical resistance.

### Examples

### Preparation of polyvinylether (A)

750 grams of a monomer mixture of 50 mol % cyclo hexyl vinylether and 50 mol % of 4-hydroxybutyl vinyl ether were fed into an autoclave and purged with N2. The mixture was heated at 90 °C and, under continuous stirring, a solution of the initiator (azo initiator dimethyl 2, 2'-azobis (2-methylpropionate) available as V-601 from Wako Pure Chemical Industries, Ltd.) in methyl ethyl ketone (0.10 mol/L) was fed with an HPLC pump over 20 h (at a ratio of 5 g V601/h). After this time the reaction was stopped and volatiles were removed in a rotary evaporator at 90 °C. The obtained poly vinyl ether is a liquid.

The polymer obtained has an OH-value of 210 mg KOH/g and an APHA color number of 49. Polyvinyl ethers (A) have a low viscositiy; the viscositiy η of the polyvinylether obtained is 1.5 Pa.s. (80 % in Butylacetate, T= 23°C).

This polyvinylether will be referred to the further examples as PVE. In the examples the solution of PVE in butyl acetate has been used.

### Example 1:

A mixture of PVE and a polyisocyanate (Basonat® HDI-isocyanurate 100) in butylacetate as solvent has been produced. Basonat® HDI-isocyanurate 100 is a well known cross linker in coating comnpositions.

For comparison PVE has been replaced by Johncryl 507 and 588, which are low molecular weight polyacrylates comprising hydroxyl groups, are solved in butyl acetate. Johncryl 507 and 588 are recommended as polyols in coating compositions. Additional butyl acetate has been added to obtain same solid contents and ratios polyol/Basonat.

The mixtures have been coated on glass or steel plates (depending of the test method) and have been cured at 150°C for 30 minutes in a circulating air unit.

**Table 1: composition of mixtures with Basonat**

| | Example 1 | Comparison 1 | Comparison 2 |
|---|---|---|---|
| polyol | PVE | Johncryl 507 | Johncryl 588 |
| parts by weight of solution of polyol | 64.3 | 60.1 | 79.6 |
| Basonat HDI-isocyanurate 100, parts by weight | 18.6 | 21.9 | 15.9 |
| Additionally added Butylacetate parts by weight | 17.1 | 18 | 4.5 |
| Total in wt. % | 100 | 100 | 100 |
| Solid content in % by weight | 70 | 70 | 70 |
| ratio Polyol : Basonat | 70:30 | 70:30 | 70:30 |

Various performance tests have been performed, results are found in the tables below.

**Table 2: Pendulum hardness on glass-plate:**

| Kick after storage time | PVE | Johncryl 507 | Johncryl 588 |
|---|---|---|---|
| 1 day storage | 96 | 40 | 97 |
| 7 days storage | 96 | 80 | 128 |

Table 2 lists the number of kicks of a pendulum until the coating (on a steel plate) was visually damaged. More kicks represent a higher mechanical strength of the coating

**Table 3: further performance tests**

| Test | Measure | PVE | Johncryl 507 | Johncryl 588 |
|---|---|---|---|---|
| Hydrolysis test, storage of coated substrates in water (21 °C) | optical observation after 7 days | No change | No change | No change |
| UV-resistance test as described below* | b20-b0* | 2.9 | 2.5 | 2.1 |
| Schwit condensate test on steel plate | optical observation after curing | No change | No change | No change |

For the UV resistance test aluminum plates with white background have been coated with the curable composition and have been cured as described above. The coatings were clear and did not comprise dyes or pigments. A b0 value has been determined as measure of the transparency of the coating. The coated substrate has been put on a belt which was moved under a UV lamp (120 W/cm) and has thus been exposed to UV radiation. The belt speed was 15 meter/min. The procedure has been repeated 20 times (hence exposure of 20 x 15 m/min) Thereafter the b20 value has been determined. The difference of the b20 and b0 value is a measure of UV resistance. Low differences represent a good UV resistance.

**Table 4: etch-test (coated substrates (steel) under defined conditions in gradient oven, temperature increased over 30 min from 30 to 70°C) on steel plate**

| Coated substrates | PVE | Johncryl 507 | Johncryl 588 |
|---|---|---|---|
| under water (Target: no change up to 70°C) | No damages up to 70°C | No damages up to 70°C | damages starting from 55°C |
| Under sulfuric acid 1 wt. % (Target: no change up to 55°C) | damages starting from 40°C | damages starting from 50°C | damages starting from 49°C |
| Under sodium hydroxide 1wt. % (Target: no change up to 55°C) | No damages up to 55°C | damages starting from 54°C | damages starting from 53°C |
| Under pankreatine 50 wt. % (Target: no change up to 55°C) | damages starting from 30°C* | damages starting from 37°C | damages starting from 39°C |

### Example 2:

A mixture of PVE and a melamine resin (Luwipal® 018) in butylacetate as solvent has been produced. An acid has been added to catalyze the reaction.

Luwipal is a well-known cross linker in coating compositions.

Again, for comparison PVE has been replaced by Johncryl 507 and 588, which are low molecular weight polyacrylates comprising hydroxy groups and are recommended as polyols ion coating compositions. Additional butyl acetate has been added to obtain same solid contents and ratios polyol/Luwipal.

The mixtures have been coated on glass or steel plates (depending of the test method) and have been cured at 150°C for 30 minutes in a circulating air unit.

**Table 5: composition of mixtures with Luwipal 018**

| | Example 2 | Comparison 1 | Comparison 2 |
|---|---|---|---|
| polyol | PVE | Johncryl 507 | Johncryl 588 |
| parts by weight of solution of polyol | 61.2 | 61.2 | 51.4 |
| Luwipal 018 (72 %) parts by weight in butyl acetate | 29.1 | 29.1 | 20.8 |
| additionally added butylacetate parts by weight | 7.6 | 7.6 | 26.3 |
| p-toluen-sulfonic acid (10 %) parts by weight | 2.1 | 2.1 | 1.5 |
| Total in wt. % | 100 | 100 | 100 |
| Solid content in % by weight | 70.1 | 70.1 | 50 |
| Ratio polyol:Luwipal | 70:30 | 70:30 | 70:30 |

Various performance tests have been performed, results are found in the tables below.

**Table 6: Pendulum hardness on glas-plate:**

| Kick after storage time under different conditions at R.T. | PVE | Johncryl 507 | Johncryl 588 |
|---|---|---|---|
| 1 day storage | 137 | 119 | 137 |
| 7 days storage | 137 | 119 | 137 |

Table 6 lists the number of kicks of a pendulum until the coating (on a steel plate) was visually damaged. More kicks represent a higher mechanical strength of the coating

**Table 7: further performance tests**

| Test | Measure | PVE | Johncryl 507 | Johncryl 588 |
|---|---|---|---|---|
| Hydrolysis test, storage of coated substrates in water (21°C) | optical observation after 7 days | No change | No change | No change |
| UV-resistance test as described above* | b20-b0* as described above | -0.7 | 1.2 | 0.8 |

**Table 8: etch-test (coated substrates (steel) under defined conditions in gradient oven, temperature increased over 30 min from 30 to 70°C) on steel plate**

| Coated substrates | PVE | Johncryl 507 | Johncryl 588 |
|---|---|---|---|
| Under Water (Target: no change up to 70°C) | No damages | No damages | damages starting from 60°C |
| Under Sulfuric acid 1 wt. % (Target: no change up to 55°C) | damages starting from 30°C | damages starting from 40°C | damages starting from 41°C |
| Under Sodium hydroxide 1wt. % (Target: no change up to 55°C) | No damages | No damages | No damages |
| Under Pankreatine 50 wt. % (Target: no change up to 55°C) | No damages | damages starting from 55°C | No damages |

## Claims

1. Curable composition comprising
a polyvinylether (A) which is composed to at least 60 % by weight of radically polymerizable compounds with at least one vinyl ether group (hereinafter referred to as vinyl ether monomers) and has a content of hydroxy groups of at least 0.01 mol hydroxy groups per 100 grams of polyvinylether
and a compound (B) which comprises at least two functional groups selected from epoxy groups, isocyanate groups, amino groups and hydroxy or alkoxy groups.

2. Curable composition according to claim 1, wherein the polyvinylether comprises 0.05 to 1 mol hydroxy groups per 100 grams of polyvinylether

3. Curable composition according to claim 1 or 2, wherein the polyvinylether (A) is the polymerization product of
(a) vinyl ether monomers comprising no hydroxy group
(b) vinyl ether monomers comprising at least one hydroxy group and
(c) further non-vinyl ether monomers which are copolymerizable with (a) and (b)

4. Curable composition according to any of claims 1 to 3 wherein vinyl ethers (a)
are selected from
(a1) mono vinyl ethers of formula I
H₂C=CH-O-R₁
wherein R₁ is hydrocarbon group which may comprise ether groups and consists of 1 to 20 C atoms.
(a2) divinylethers of formula II
H₂C=CH-O-R₂-O-CH=CH₂
wherein R₂ is a hydrocarbon group which may comprise ether groups and consists of 1 to 20 C atoms.
or from mixtures of (a1) and (a2)

5. Curable composition according to any of claims 1 to 4, wherein R₁ in formula I is a C1 to C10 alkyl group, a cyclohexyl group or a group of formula
(X-O)ₙY
wherein X is a C2- to C4- alkylen group or a cyclohexylen group, Y is a C1 to C4 alkyl group and n is number from 1 to 4

6. Curable composition according to any of claims 1 to 4, wherein R₂ in formula II is a C1 to C10 alkylen group, a cyclohexylene group, a cyclohexane dimethylene group or a group of formula
(X-O)ₙX
wherein X is a C2- to C4- alkylen group, a cyclohexylene group or a cyclohexane dimethylene group and n is number from 1 to 4

7. Curable composition according to any of claims 1 to 6 wherein vinyl ethers (b) are vinyl ethers of formula III
H₂C=CH-O-R₃-OH
wherein R₃ is a hydrocarbon group which may comprise ether groups and consists of 1 to 20 C atoms.

8. Curable composition according to any of claims 1 to 7, wherein R₃ in formula III is a C1 to C10 alkylen group, a cyclohexylen group, a cyclohexan dimethylene group or a group of formula
(X-O)ₙX
wherein X is a C2- to C4- alkylen group, a cyclohexylen group or a cyclohexan dimethylene group and n is number from 1 to 4

9. Curable composition according to any of claims 1 to 5, wherein the composition comprises a further compound (C) with hydroxy groups

10. Curable composition according to claim 9, wherein the further compound (C) is a polyester-polyol, a polyether-polyol or a hydroxy groups comprising polymer obtained by radical polymerization.

11. Curable composition according to claim 9 or 10, wherein the composition comprises polyvinylether (A) in an amount of at least 1 by weight based on the total amount of polyvinylether (A) and further compound (C).

12. Curable composition according to any of claims 1 to 11, wherein compound B is selected from polyepoxides, polyisocyanates, polyether amines, polyacrylates with primary or secondary amino groups and melamine resins

13. Curable composition according to any of claims 1 to 12, wherein the molar ratio of the hydroxy groups of (A) and (C) to the functional groups of (B) is from 0.1 : 1 up to 1 : 0.1

14. Use of the curable composition of any of claims 1 to 11 as coating material

15. Use according to claim 14 wherein the coating material is a powder coating material

16. Process for coating substrates, wherein a curable composition according to any of claims 1 to 13 is used as coating material.
